# EUROPEAN PATENT APPLICATION

(11) **EP 3 339 751 A1**
(43) Date of publication of application: **27.06.2018**
(21) Application number: 16206128.7
(22) Date of filing: 22.12.2016
(51) Int. Cl.: F24D 19/00, F16L 59/135, F16L 3/237, F28F 9/02

(54) **H-PIECE**

(71) Applicant: Danfoss A/S, 6430 Nordborg (DK)
(72) Inventor: CLAUSEN, Anders Østergaard, 8680 Ry (DK)
(74) Representative: Knoblauch, Andreas

(57) **Abstract**

A H-piece comprising two pipe elements (2, 3) which are connected by a connector (4) is described.

Such a H-piece should be formed to minimize energy losses.

To this end the connector (4) forms a thermal bar.

## Description

The present invention relates to an H-piece comprising two pipe elements, which are connected by a connector.

Such an H-piece offered by Danfoss A/S under "RLV-KS". Such an H-piece is used in heating system to establish a connection between a supply line and a return line for a heat carrier fluid on the one hand and a radiator or other heat exchanger on the other hand. The known H-piece is typical formed as one machined element and typical made of brass.

In the present description, the term "radiator" is used as an abbreviation for a heat exchanger and the fluid is mentioned as "a heat carrier fluid" but could as well be a cooling carrier fluid.
Such an H-piece is used to facilitate the installation. The H-piece generally has four ports, two for connection with the radiator at one end and two for connection with the supply and return line on the other hand. The four ports could be placed as an H (straight) or there could be an angle between supply line and the radiator inlet as well as there could be an angle between the radiator outlet and the return line.
The object underlying the invention is to avoid energy waste.

This object is solved with an H-piece as described at the outset in that the connector forms a thermal bar.

The terms "the connector forms a thermal bar" should in the present context be interpreted as a connection between the two pipe elements having no or very little heat transferee between the two pipes.

In an H-piece the heat carrying fluid flowing from the supply line to the radiator and the heat carrying fluid flowing from the radiator back to the return line are in close proximity. A consequence of this is that a certain amount of heat flows directly from the supply line via the connector to the return line without substantially heating the room. The thermal bar now avoids or at least minimizes such a flow of heat from the supply line through the connector to the return line. Therefore, energy waste can be avoided or minimized.

In an embodiment of the invention at least one of the pipe elements are connected to the connector by means of a flexible connection. Such a construction facilitates furthermore a flexible and easy mounting of the H-piece. In many cases the end of the supply line and of the return line are not properly aligned or are not in the right position to mount the H-piece. When the connection between at least one of the pipe elements and of the connector is flexible, the H-piece can be connected to each of the ends more or less separately since the pipe elements can be moved relative to each other to some extend. The same is true for the ends of lines leading to the radiator.

In an embodiment of the invention the flexible connection has an anisotropic behavior with respect to different directions in space. This means that in one direction in space the connection between the at least one pipe element and the connector is stiffer or more rigid than in another direction. The parts can still be handled as a unit.

In an embodiment of the invention a first movability around an axis parallel to the pipe elements is greater than a second movability around an axis perpendicular to the pipe elements and perpendicular to the connector. This means that tilting around one axis is not possible to the same extend as tilting or moving around another axis.

In an embodiment of the invention an air gap is provided between at least one of the pipe elements and the connector. This air gap has two effects. A first effect is that the air gap increases the thermal resistance further decreasing the heat flow from the supply line to the return line. The other effect is that an air gap allows a movability or flexibility between the connector and at least the one pipe element.

In an embodiment of the invention the connector and at least one of the pipe elements are connected by a Snap-On connection. The connector is snapped or clipped onto the pipe element which is an easy way to connect the two or three elements.

In an embodiment of the invention the connector is made of a plastic material, fiber material, a ceramic material, rubber, or a combination of at least two of these materials. These materials have a low thermal conductivity and form almost a thermal insulator.

In an embodiment of the invention the material of the connector has a specific thermal conductivity of at most 15 W/(mK), in particular of at most 1 W/(mK), and preferably 0,1 W/(mK). The connector has a very low thermal conductivity compared to the known machined one body element made of brass, which typical having a conductivity between 300-400 W/(mK).
Using such a thermal conductivity minimizes the thermal losses generated by flow of heat from the supply pipe element, i.e. the pipe element connected to the supply line, to the return pipe element, i.e. the pipe element connected to the return line.

In an embodiment of the invention at least one of the pipe elements comprises a valve element. The valve element could be a valve with a valve seat or another element capable to close for the fluid flow through the pipe.

In a further embodiment both pipe elements comprises a valve element. Using such valve elements makes It possible to close the fluid flow through the radiator and thereby possible to change or repair the radiator without the need for turn off the water for an entire building.

In still a further embodiment, a cover plate covers the front part of the valve elements and or the front part of the connector. By using such a cover plate, the connection piece and or the valve(s) would be protected against unintended contact. The cover plate can furthermore have a visual design and give the H-piece a more fashionable look.

An embodiment of the invention will now be described in more detail in connection with the drawing, wherein:

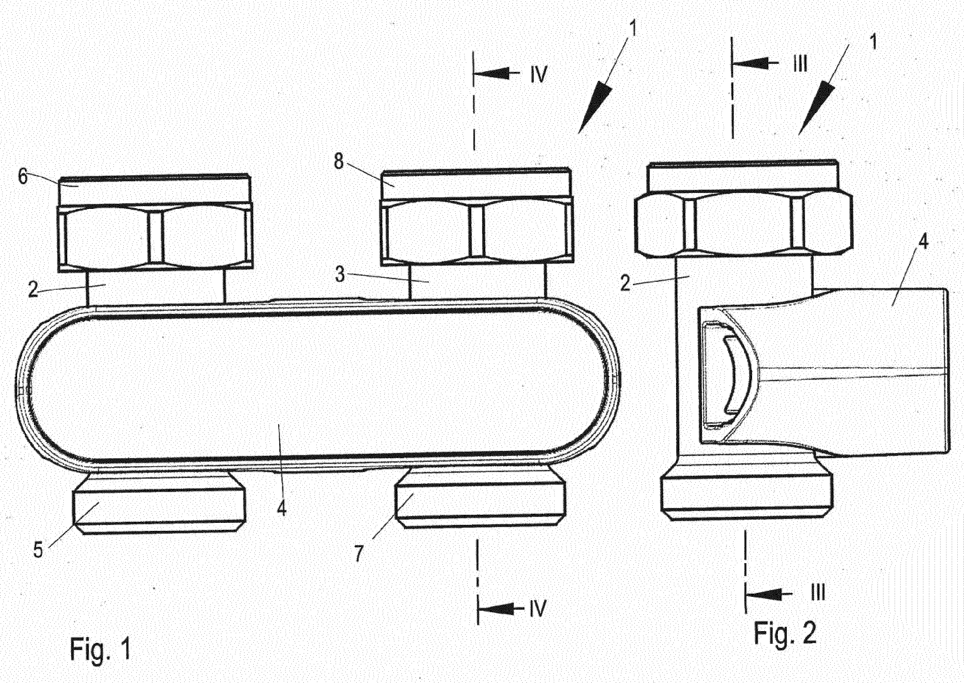

- Fig. 1: is a front view of an H-piece,
- Fig. 2: is a side view of the H-piece,
- Fig. 3: is a sectional view III-III according to Fig. 2,
- Fig. 4: is a sectional view IV-IV according to Fig. 1,
- Fig. 5: is an enlarged detail of Fig. 4,

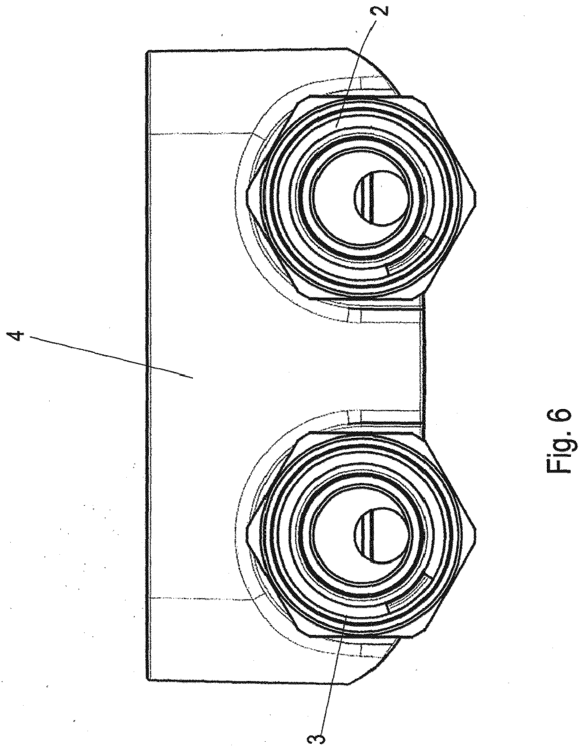

- Fig. 6: is a top view of the H-piece,
- Fig. 7: is a sectional view VII-VII according to Fig. 4, and
- Fig. 8: is a detail of the view of Fig. 7.

An H-piece 1 comprises a first pipe element 2 and a second pipe element 3. Both pipe elements 2, 3 are connected with a connector 4.

In normal use a lower end 5 of the first pipe element 2 is connected to a supply line and an upper end 6 of the first pipe element 2 is connected to an input of a radiator. In a similar way a lower end 7 of the second pipe element 3 is connected to a return line and an upper end 8 of the second pipe element 3 is connected to an outlet of the radiator.

To avoid a larger flow of heat from the first pipe element 2, which has basically the same temperature as the incoming heat carrying fluid, to the second pipe element 3 which has a much lower temperature the connector 4 forms a thermal bar. Preferably, it forms a thermal insulation. However, a perfect insulation is not possible in practice.

To achieve this thermal insulation the material of the connector 4 may have a thermal conductivity of at most 15 W/(mK), in particular of at most 1 W/(mK), and preferably at most 0,1 W/(mK). Such a thermal conductivity can be achieved when using a plastic material, fiber material, like glass or carbon fiber, a ceramic material, rubber, or a combination of at least two of these materials to form the connector 4.

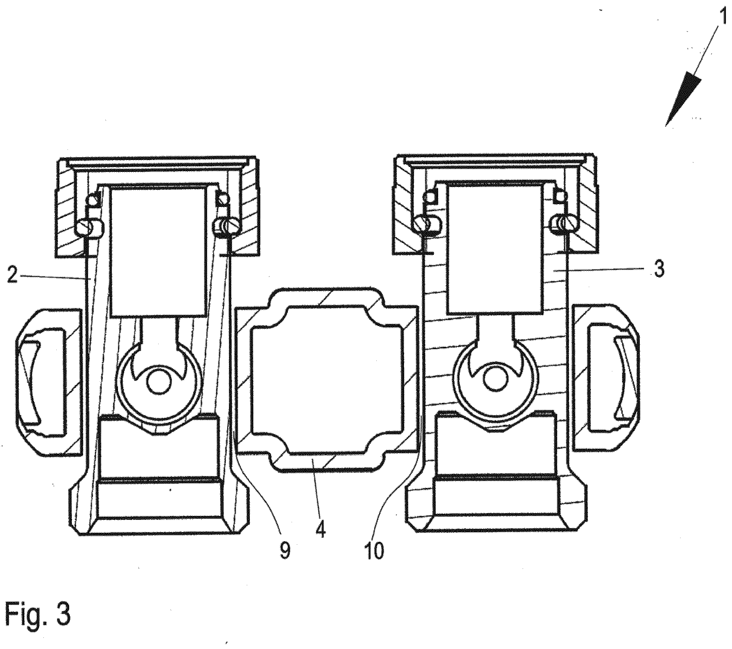

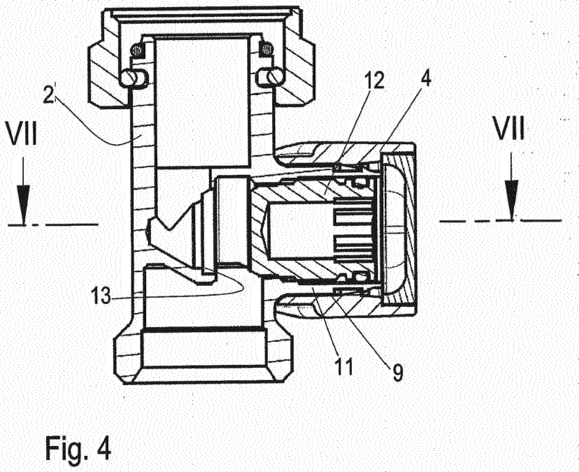

Furthermore, as can be seen in Fig. 3 to 5 and 7, 8 an air gap 9 is provided between the first pipe element 2 and the connector 4 and a further air gap 10 is provided between the second pipe element 3 and the connector 4. The air gaps 9, 10 increase the thermal resistance for a heat flow from the first pipe element 2 to the second pipe element 3.

The air gap 9 (the same is true for the air gap 10) continues in circumferential direction around a pipe section 11 extending perpendicular to the first pipe element 2. The pipe section 11 accommodates a valve element 12 which can be moved to contact a valve seat 13 in order to shut off a radiator connected to the H-piece 1.

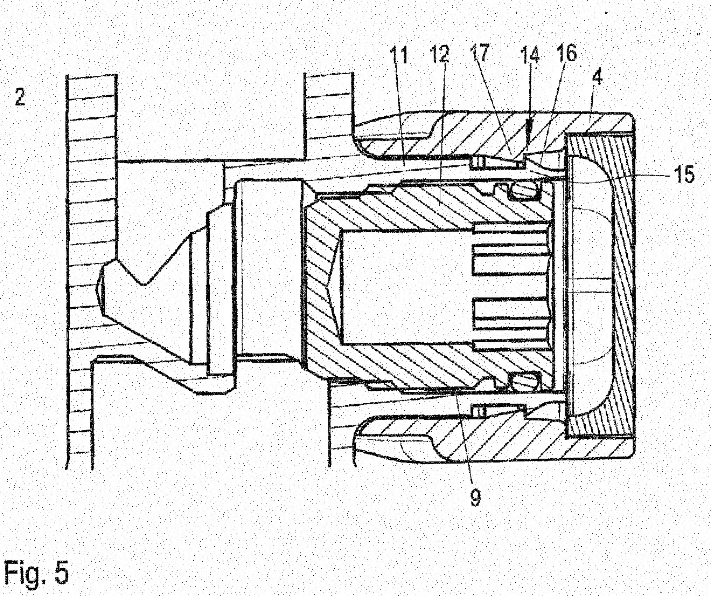

As can be seen in Fig. 5, the connector 4 is held on the pipe section 11 by means of a Snap-On connection 14. At the end of the pipe section 11 the Snap-On connection 14 comprises a tooth 15 having a front slope 16 and a corresponding tooth arrangement 17 on the inner side of the connector 4. When the connector 4 is pushed onto the pipe section 11 the connector widens a bit when the tooth arrangement 17 is pressed outwardly and moved over the front slope 16 and snaps radially inwardly after the tooth arrangement 17 has passed the tooth 15 on the pipe section 11.

It is, however, apparent that the air gap 9 in a direction parallel to the first pipe element 2 has a smaller extension than the air gap around the pipe elements 2, 3 shown in Fig. 3. The consequence of this is that the connector 4 can be moved relative to the pipe elements 2, 3 by tilting it in a plane in Fig. 3, however, to a lesser extend by tilting it around an axis perpendicular to the plane shown in Fig. 5. In other words, there is a flexible connection between the connector 4 and at least one of the two pipe elements 2, 3. This flexible connection has an anisotropic behavior with respect to different directions in space. A tilting of the connector 4 around an axis through the two pipe elements 2, 3 is possible to a lesser extend than a tilting around a vertical axis between the two pipe elements 2, 3 or around an axis which is perpendicular to the two pipe elements 2, 3 and perpendicular to the connector 4 is possible.

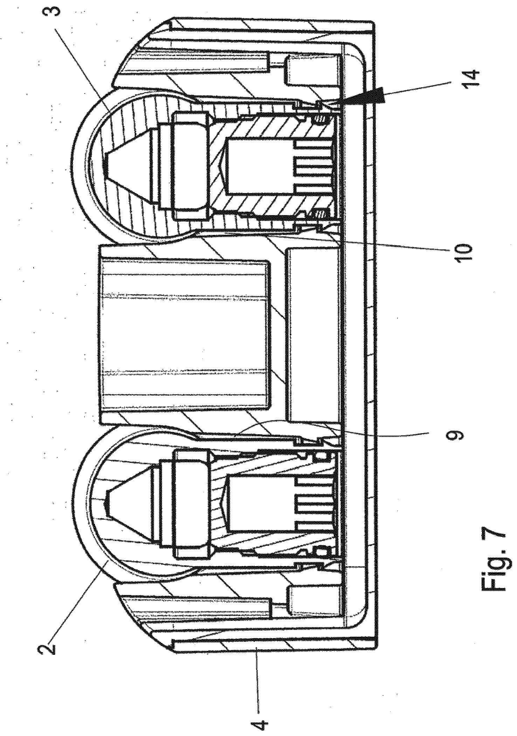

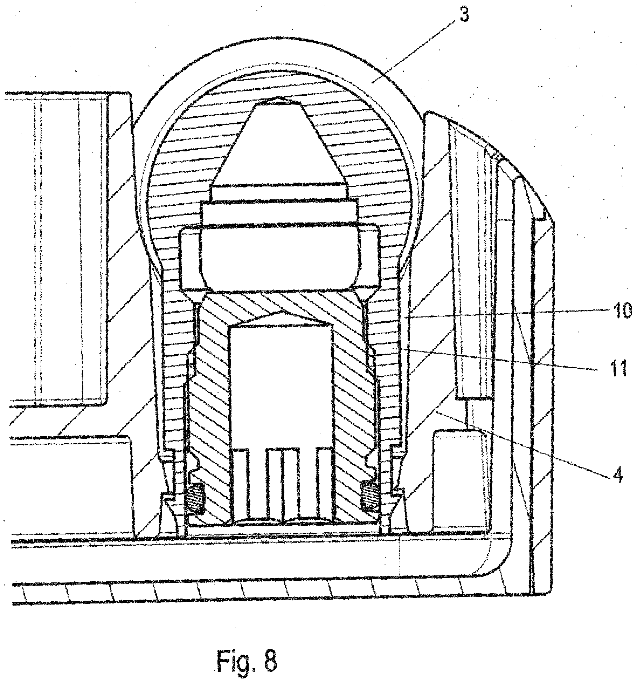

The air gaps 9, 10 are again shown in Fig. 7 and 8. These figures again show the Snap-On connection 14. The Snap-On connection 14 can be made by completely surrounding the pipe section 11. However, it is also possible that the Snap-On connection 14 only has areas distributed in circumferential direction around the pipe section 11, but interrupted in circumferential direction.

## Claims

1. H-piece comprising two pipe elements (2, 3) which are connected by a connector (4), **characterized in that** the connector (4) forms a thermal bar.

2. H-piece according to claim 1, **characterized in that** the connector (4) and at least one of the pipe elements (2, 3) are connected by means of a flexible connection.

3. H-piece according to claim 2, **characterized in that** the flexible connection has an anisotropic behavior with respect to different directions in space.

4. H-piece according to claims 2 or 3, **characterized in that** a first movability around an axis parallel to the pipe elements (2, 3) is greater than a second movability around an axis perpendicular to the pipe elements (2, 3) and perpendicular to the connector (4).

5. H-piece according to any of claims 1 to 4, **characterized in that** an air gap (9, 10) is provided between at least one of the pipe elements (2, 3) and the connector (4).

6. H-piece according to any of claims 1 to 5, **characterized in that** the connector (4) and at least one of the pipe elements (2, 3) are connected by means of a Snap-On connection (14).

7. H-piece according to any of claims 1 to 6, **characterized in that** the connector (4) is made of a plastic material, a ceramic material, fiber material, rubber, or a combination of at least two of these materials.

8. H-piece according to any of claims 1 to 7, **characterized in that** the material of the connector (4) has a specific thermal conductivity of at most 15 W/(mK), in particular of at most 1 W/(mK), and preferably at most 0,1 W/(mK).

9. H-piece according to any of claims 1 to 8, **characterized in that** at least one of the pipe elements (2,3) comprises a valve element.

10. H-piece according to any of claims 1 to 9, **characterized in that** both pipe elements (2,3) comprises a valve element.

11. H-piece according to any of claims 9 or 10, **characterized in that** a cover plate covers the front part of the valve element(s) and or the front part of the connector (4).
